# EUROPEAN PATENT SPECIFICATION

(11) **EP 3 143 706 B1**
(45) Date of publication and mention of the grant of the patent: **29.01.2020**
(21) Application number: 15793349.0
(22) Date of filing: 15.05.2015
(51) Int. Cl.: H04B 7/185

(54) **SYSTEM AND METHOD FOR SATELLITE ROUTING OF DATA**
SYSTEM UND VERFAHREN ZUM SATELLITEN-ROUTING VON DATEN
SYSTÈME ET PROCÉDÉ POUR ACHEMINER DES DONNÉES DEPUIS DES SATELLITES

(30) Priority: 15.05.2014 US 201461993758 P
(43) Date of publication of application: 22.03.2017
(73) Proprietor: Leosat, LLC, Pompano Beach, Florida 33069 (US)
(72) Inventor: ANDERS, Cliff, Pompano Beach, Florida 33069 (US)
(74) Representative: Deambrogi, Edgardo
(86) International application number: PCT/US2015/031119
(87) International publication number: WO 2015/175958

(56) References cited:
- EP-A2- 0 652 649
- US-A- 5 467 345
- US-A1- 2013 331 026
- US-B1- 6 628 919

## Description

### FIELD OF THE INVENTION

The present invention is generally directed toward a system for providing high speed network connections globally. More particularly, it discloses a method for routing data between satellites and the ground based networks.

### BACKGROUND OF THE INVENTION

LeoSat has come to this market with the specific goal of applying new and emerging technologies to the Satellite Data Market. We are a forward-looking company with an engineering history of developing and providing data/voice communication in harsh environments.

We strongly believe that it is time for a market shift in satellite data communications. Technology developments and demands have lined up to facilitate a major shift in how satellite data is viewed and delivered. While the market has many long-established companies, there is a tendency as in most long time operators, to continue to look at the market with the way "things have always been done." Both existing and potential new customers to this market are being driven by the ever expanding growth in the need to stay connected to the Internet with high-performance connections everywhere Many customers are being held back by the current offerings which miss on both price and performance. Cruise ships can't begin to keep up with their passenger's demand of always on high-speed Internet services. services. Oil exploration and production need much faster data transport than is available today. The developing world needs cost effective high-performance networks for telemedicine and distance learning. Widely dispersed countries like Indonesia, Canada, parts of China, Africa, South America and the Soviet Union need cost effective high-speed networks to help these areas develop. When disaster strikes such as earthquakes, hurricanes or a tsunami rescue and relief efforts need to be able quickly establish solid communications and data networks. Finally, there is a demand for a worldwide truly secure data network solution. Current operators providing 1-2 Mbs (even 12 Mbs in limited cases) at high costs are not up to the challenges of these demands. Most require 7-9 foot dishes for marginally high speed access. These antennas must be set in concrete to maintain focus on a satellite some 22,500 miles out in space. Even then the performance of these systems is poor. Twelve (12) megabits on such as a system performs like 0.5 megabits on a normal network. This is not nearly enough for the demands. The equipment is expensive, large and the data performs poorly. The cost of the data is still very high and in the quantities needed, simply not available.

### How we see the market today

We see the satellite data markets as being ill-served today. There are some new advances in satellite services being offered, but they are just incremental improvements over the past generations of offerings. Many of the same major problems with the older systems, still exist in the new offerings. Additionally, these problems are going to have even more negative effects in the future.

### Problems with the Current Systems

### Latency

Latency (delay) is partly a factor of physics and partly a factor of design. It is not just a problem with having a delay in telephone calls transmitted over the links; it is a problem with data transfers, applications and even web browsing. It is a problem that will continue to cause increasing frustration with the use of such connections for access to the Internet. The backbone and the connection speeds on the Internet are all increasing at exponential rates. As more devices and people are connected, more speed, efficiency and bandwidth are required. Websites and other such portals are optimized to serve as many clients as possible, as efficiently as possible. Administrators make tradeoffs in their methods of identifying efficiency models for their servers. When a client connects to a website and makes a request, a data socket is established. The server services these sockets in pools. If a particular client is taking more than XX ms to respond, the server will terminate that connection and hope the client comes back with a better connection. The servers simply can't wait on slow connections and stay efficient. The "delay timeout" settings have been lowered and will continue to be lowered as statistically the connection speeds increase. Another cause of dropped connections is a client that requires a lot of retransmission of the data packets. Again, the server will identify these connections and drop them, hoping the client will return with a better connection. To put this in the specifics of the GEO Satellite serviced client, a connection with a round trip delay of 500ms will see increasing performance degradation in the future. Latency has a terrible performance impact on any TCP/IP network.

### Performance

Latency drives performance on a data network. TCP/IP is the transport for today's data networks, and due to the methods used in this transport latency or delay (for the purposes of this discussion the terms are interchangeable) are major factors in actual performance. When a service provider sells a client a megabit rate, the actual throughput on that bandwidth will be significantly impacted by the satellite system being used. Most satellites providing the services today are in a GEO orbit level. This level is approximately 36,000 Km (22,500 miles) above the earth. There are some new systems coming on line that are in MEO orbit which is approximately 8,500 Km (5,200 miles). However, as you can see in attachment "A", neither system will provide for the systems necessary to keep up in the coming years. For reference a GEO system promising 50Mbs bandwidth will actually only provide I Mbs of actual throughput when using a TCP/IP connection. The type connection all Internet browsing uses today.¹
RTT 10 ms => TCP throughput = 52428000 bps = 52Mbps
RTT 20 ms => TCP throughput = 26214000 bps = 26Mbps
RTT 50 ms => TCP throughput = 10485600 bps = 10Mbps
RTT 100 ms => TCP throughput = 5242800 bps = 5.2Mbps MEO Best Performance
RTT 150 ms => TCP throughput = 3495200 bps = 4.3Mbps
RTT 200 ms => TCP throughput = 2621400 bps = 2.5Mbps
RTT 300 ms => TCP throughput = 1747600 bps = 1.7Mbps
RTT 500 ms => TCP throughput = 1048560 bps = 1Mbps GEO Best Performance

There are WAN accelerators (such as Riverbed Steelhead) that use caching and sliding frame sizes to help improve the throughput, but they can't change the physics of the time it takes the radio signal to traverse the distances.

### Coverage

There is not a system today that can provide the same level of high speed Internet connections throughout the world. There are both GEO and MEO systems that provide coverage for locations to approximately 35-45° North or South of the equator. The further from the equator one travels the slower the speed will become and the quality of the connection will suffer as well. While some operators in the market place are claiming "worldwide coverage", the fine print reads that the system will revert to lower frequency bands (very slow speed) in and/or low bandwidth connections farther reaches of their system coverage areas. No system today provides the same high speed data worldwide.

### Mechanical dishes

For clients that move e.g. maritime, vehicles, Airplanes tracking dishes (or very expensive and power hungry phased array antennas) must be used to keep the dishes pointed to the satellite for service. The dishes require 3 axis stabilized platforms that are continuously operating motors and gears or belts, to keep the beam accurately pointed at its servicing satellite. Therefore, there are numerous moving parts that are subject to wear and failure over the life of the system. Such systems require significant preventative maintenance checks and part replacements. This requires vendor visits to just about anywhere in the world to replace a belt, motor or BUC, that has failed while in service. This drives costs, operational outages and therefore loss revenues. It increases costs to the operator and causes increased costs to the clients as well. These solutions have proven difficult to maintain to a level that complies with SLA's.

### Client station costs

The current satellite client station costs for high capacity users are substantial ($100K +). The cost of installing, maintaining and changing the client stations is a significant factor in the total cost of operation of the satellite Internet data. If a MEO or LEO system is used, the client station requires at least two tracking dishes and for redundancy a third should be installed.

The problems with the prior art indicate that there is a need for a new communication system for providing global network access. We disclose herein a system and method for transmitting data that employs new the satellite payloads, new data treatment methods, new data routing methods and new client terminals, and new technologies that significantly change the paradigm of what can be delivered and at what cost.

D1 = US 5 467 345 discloses a packet routing system and method therefor, wherein information packets are routed among a constellation of satellite nodes in a communication system by means of routing tables for each node that are generated in advance by a recursive process that considers link usage and anticipated link loading for different times and states of the constellation.

### SUMMARY OF THE INVENTION

In a first aspect, the invention consists in a system for routing data between ground-based networks and satellites,the system comprising: a plurality of low earth orbit communication satellites, wherein each low earth orbit communication satellite has a plurality of adjacent low earth orbit communication satellites; a plurality of terrestrial client stations selected from ground-based client stations, mobile client stations, and combinations thereof; a plurality of terrestrial gateways; a plurality of communication links between said plurality of low earth orbit communication satellites and said plurality of terrestrial gateways; a plurality of communication links between said plurality of low earth orbit communication satellites and said plurality of terrestrial clients; and a plurality of inter-satellite communication links between said adjacent low earth orbit communication satellites, characterised in that each of said plurality of low earth orbit communication satellites comprise twelve client facing beams and four inter-satellite link beams, and wherein each of said twelve client facing beams can be dynamically switched via software control between a client mode and a gateway mode.

Further aspects of the invention are defined in the dependent claims.

### BRIEF DESCRIPTION OF THE DRAWINGS

Further advantages of the invention will become apparent by reference to the detailed description of preferred embodiments when considered in conjunction with the drawings:

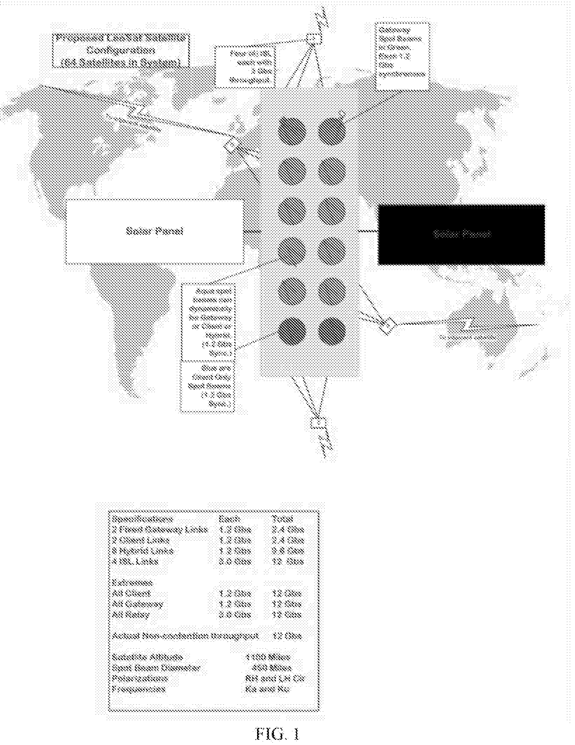

FIG. 1 illustrates an embodiment of the satellite configuration.

### DETAILED DESCRIPTION

The following detailed description is presented to enable any person skilled in the art to make and use the invention. For purposes of explanation, specific details are set forth to provide a thorough understanding of the present invention. However, it will be apparent to one skilled in the art that these specific details are not required to practice the invention. Descriptions of specific applications are provided only as representative examples. Various modifications to the preferred embodiments will be readily apparent to one skilled in the art, and the general principles defined herein may be applied to other embodiments and applications without departing from the scope of the invention. The present invention is not intended to be limited to the embodiments shown, but is to be accorded the widest possible scope consistent with the principles and features disclosed herein.

We built the disclosed system from the ground up, instead of from the satellite down. This meant we attacked the issues with the client stations first. Considerations were size, profile, redundancy, flexibility, reliability and cost. In a first embodiment, we specially designed a client station antenna for large users as described herein:

| | |
|---|---|
| Size: | 40 inches x 40 inches x 4 inches (LxWxH) X 2 (one transmit and one receive) |
| Profile: | Mounts flat on flat surface with 4 inch wind profile |
| Redundancy: | Two independent systems that work in parallel with both active at all times. |
| | Each has the ability to engage multiple satellites simultaneously. Either one can provide the full bandwidth purchased. |
| Flexibility: | Supports multiple data protocols and coding schemes. Such as TCP/IP and DBV-x. Ability to track multiple satellites at the same time. |
| Reliability: | No motors, belts, gears or even BUC's. Simply no moving parts. |
| Cost: | < $50K |
| Capacity: | Up to 2 Gbs per beam. Multiple beams available. |

The antenna provides significant advantages over other client station antennas, in that it has a high capacity, and is significantly less expensive than arrays or other antennas that are typically used. Furthermore, it has a low wind provide and can engage multiple satellites simultaneously. The antennas are two independent systems that work in parallel to provide redundancy.

We then attacked the issues with performance and cost per megabit. The system is designed with the following specifications, but it should be appreciated that this is just one working embodiment, and that variations and alternatives are within the scope of this disclosure.

### Latency

Understanding that latency is the biggest factor in performance (other than raw bandwidth) we designed the system with a latency factor of <50ms. This provides for a level of performance that will not only exceed today's requirements, but also be in line to perform well with the Internet and systems for many years into the future. Low latency is achieved by using a low orbit of 1000 miles instead of 22,000 miles typically used by other MEO or GEO communication satellites.

### Performance

Having addressed the latency issue, our system will outperform a GEO system by a factor of 50 to 1. It will outperform a MEO System by a factor of 10 to 1. This is directly related to costs as well. The performance difference means that a customer would have to contract for a high multiple of bandwidth from one of the other systems to receive the same user experience of a much lower bandwidth rate from our system. One other significant difference in our system and the current systems is that our service offers synchronous bandwidth. Our upload speeds are the same as our download speeds. This will make a huge difference in the ability of the clients to maintain servers, email and video across these connections. This will also be a welcome benefit to mobile operators such as Cruise lines with their administrative data needs and oil field exploration with their collected data uploads and real time video monitoring of remote areas.

In summary, LeoSat will be the first company to offer a unique combination of lowest latency, actually usable high speeds at very attractive prices and truly global reach The ability of the satellite to off load the entire capacity of the maximum client links via the ISL's is extremely important as it goes to flexibility, avoiding satellite saturation and being able to use remote gateways to serve difficult areas.

### Pricing

We have designed the system to allow our purchase of our core bandwidth from strategically located locations where there is heavy competition by large Internet backbone providers. Using the competition between the backbone providers we will have access to the lowest pricing in the market.

The flexibility we built into our design allows for our being able to have our core locations compete even with each other for the lowest cost of Internet backbone. Our pricing to the clients will be based upon a bandwidth committed information rate (CIR) with no monthly usage caps or other added costs. Therefore, continuous use will not be a problem. Bandwidth usage will be monitored and recorded with usage statistics available at any time. If a client is hitting its maximum bandwidth level, additional bandwidth can be increased as needed to meet demand. We will even offer programs where the bandwidth can be adjusted on a schedule of high season and low season. It should be appreciated that our design does not require our "adding a transponder" or any other such ceilings. Our design is delivery by software settings in the client that can be changed remotely. No additional equipment and no site visit required.

### Coverage

The coverage will truly be worldwide. We will be able to deliver the same quality and quantity of bandwidth to any client regardless of their location. Such large covered is accomplished by using 64 satellites in overlapping orbit patterns that are able to communicate with each other. In one embodiment, the pattern of orbits of satellites can be described as a duel rosetta to ensure overlapping coverage.

### No Mechanical dishes

As described earlier our client antennas have no moving parts and no parts to change. If one fails there is already a redundant one running that can deliver the complete bandwidth. Additionally in the event of a failure a change out is extremely simple. There is no real "pointing" of the antenna, just detach and replace.

### Client station costs

We have targeted our highest bandwidth client station to cost less than $40k with full redundancy. Other portable and small client stations without redundancy are expected to cost approximately $20 K. These costs are significantly lower than other satellite communication providers.

### Redundancy

The new system is fully redundant. The antennas are redundant, the radios and all supporting equipment is installed with redundancy in place.

### Meeting Client Requirements

The client experience with the new system will be very much like their experience with Internet usage in terrestrial networks. The performance will be on par with telecom provided connections to offices. "Always on" connections.

### System comparison

| **Operation Aspects** | **GEO** | **MEO** | **IT Centricity** |
|---|---|---|---|
| **Latency** | **500ms** | **130ms** | **50 ms** |
| **IP Performance @ 50Mbs** | **1 Mbs** | **1.7 Mbs** | **37 Mbs** |
| **Pricing** | **$750+ per Hz/Mbs** | **$800+ per Hz/Mbs** | **$800 per Hz/Mbs (est.)** |
| **Coverage** | **35° to 45° of equator** | **35° to 45° of equator** | **Worldwide** |
| **Mechanical Dish** | **1 or 2** | **2 minimum** | **None** |
| **Client Station Cost** | **$150,000+** | **$450,000+** | **< $50,000** |
| **Redundancy** | **Fall back to Ku band** | **Not fully redundant** | **Fully redundant** |
| **Sold by** | **Bandwidth + Caps** | **Bandwidth + Caps** | **Bandwidth no caps** |

The comparison chart fails to capture some of the benefits of the currently described system over the current systems. The ability of the clients to enjoy an always on connection and equal upload speeds should not go un-noticed. The performance differences are not just important today, but will become increasingly important in the future as everything speeds up. Current systems with a significant latency issue is a growing problem that will only become worst with time.

It should be appreciated that the disclosed invention can have many different applications, including, but not limited to, the following:
1) Maritime, including but not limited to Cruise Lines, commercial shipping, Ferries and possible military contracts.
2) Oil Exploration and production. Both on-shore and off-shore.
3) Island Nations - Schools, telemedicine, remote location government services and feed for ground internet providers.
4) Extreme Northern and Southern regions that lack a business case for fiber and are not served by current satellite solutions.
5) All clients that currently use satellite, but need symmetric or high rate "up" bandwidth. News media and any organization that produces large data in remote places.
6) All clients where real time remote operation or monitoring of equipment in remote locations is necessary.
7) Emergency response teams worldwide. A complete client station that will have the ability to deliver a true high speed backbone network anywhere in the world. The client station will weigh less than 200lbs and will require less than 800 watts of power. Both phone and data services will be established over a common link.
8) Business clients that require the most secure commercial network connectivity in the world.
9) Island nations seeking high speed backbone connectivity for their services.

It should also be appreciated that the disclosed invention provides the following advantages over the prior art:
1) The system uses the high speed and large bandwidth of the Ka band to a LEO system. KA band is high frequency which is more susceptible to moisture.
2) Networking a constellation of satellites together with high throughput data capabilities using low latency routing techniques.
3) Due to system design we will be able to place ground stations in the most beneficial economical locations for wholesale Internet bandwidth purchases, for example at internet backbones.
4) Significantly reducing latency and thereby significantly increasing bandwidth performance.
5) Introducing a new client station design that will address many of the problems with the existing client stations. (e.g: Size, maintenance, moving parts, power requirements)
6) The first and only true worldwide total wideband high throughput commercial satellite system deployed.
7) The most secure encrypted client to encrypted client non-military data network in the world. Because the system employs the use of protocol independent transport (Multiprotocol Label Switching (MPLS)), it can securely transmit multiple data feeds without compromising security.
8) The first high bandwidth many in the far north/south and middle of the ocean will see. Bandwidth up to 1.2 Gbs.
9) Any client station can also be a gateway.
10) First MPLS network in space.

### The Technical Details

### Satellite Routing

Fig. 1 illustrates the "Bent Pipe" architecture use in the vast majority of all satellite deployments of the prior art. This is where the satellite is nothing more from a routing perspective than a relay. The data is sent to the satellite from the client, only to be retransmitted back down to a gateway attached to the Internet or private network. There has been little to no processing as far as routing is concerned on the satellites.

Recently there have been some deployments of what the satellite industry terms a "mesh" network. This enables client stations on the same satellite to send data directly to each other. This was accomplished with the routing devices being placed at the client stations and still using the satellite as a relay. However, there is no facilitation for clients not on the same satellite.

The only other routing that is currently taking place on commercial satellites is being done on the Iridium system. The Iridium system is very much like a cellular phone system, just in the sky. It routes cellular phone calls from the user's handset to the nearest gateway via Inter-Satellite Links (ISL's). It also routes very small data using the same methodology. The Iridium system is limited to routing their data (calls) in the same methods that cellular calls are routed on land based systems.

Other prior known methods don't actually transmit at advertised rates. For example, O3B claims that it transmits 84 Gbs but really only transmits at 19.2 Gbs because the data is not really being routed.

Some of the newest and most advanced deployments of satellite systems suffer from the inability of moving their customers data off their satellites. The case in point is O3B. While they claim throughput of 84 Gbs on their 8 satellite constellation, they actually only have a maximum throughput of 19.2 Gbs. The O3B satellites each have 10 customer beams and 2 gateway beams. While the customer beams could max out at 10 X 1.2Gbs = 12 Gbs each satellite, they can only get 2 X 1.2 Gbs = 2.4 Gbs of that to their gateways. So the real throughput is only 2.4Gbs per satellite. Or stated another way. a maximum of 2.4 Gbs available per 1/8^{th} of the earth. It is important to note that O3B is not alone in claiming the sum of their client beams as their satellite "throughput". Much to our dismay it is widely done in the industry.

We recognized during the design phase of their new system that a new approach to data movement on and off satellites was necessary because the prior art methods were unable to achieve the high-throughput required.

The method disclosed herein takes a different approach with each satellite having the same number of client facing beams, but incorporating four (4) Inter-Satellite Links (ISL's) per satellite and implementing a fully managed intelligent meshed network between the satellites, gateways and clients. Prior art sattelites do not have any real processing capabilities. Incorporating such processing abilities adds significant power requirements, weights, and other constraints, but is done to maximize performance of the network. The four (4) ISL's would be one to the satellite in front, one to the rear, one to the left and one to the right. The ISL's would preferably utilize a higher frequency providing for larger bandwidth transfers between the satellites. In a preferred embodiment, that link between satellites (which are about 1500 to 1600 miles apart) is a 40GHz link.

One unique aspect of our system is that each of our client beams can be configured dynamically as a client and/or gateway through software. Prior art systems were incapable of switching dynamically between gateway and client mode where the satellite meets the earth network. As a result, the system can allocate resources as needed to reduce any bottlenecks to earth. The gateways can be activated and deactivated as demand dictates.

In one embodiment. MPLS is used as the data transport protocol. By using MPLS we are able to create end-to-end circuits across any of our links MPLS also allows the network to support circuit-based clients and packet-switching clients on the same network at the same time. So a bank, for example, can have a separate private network with its branches and ATMs instead of using the internet. At this time MPLS would appear to be a good candidate for the transport logic, however other transport protocols may also be used.

The processors on board the satellite are used to help manage the network. In a preferred embodiment, the network will be rules-based on a "cost scoring" method. The cost scoring can be weighted by latency, bandwidth costs at gateways, regional restrictions, hop counts and any number of other factors. Network management will normally be automatic, however it can be temporarily modified by network operators to work around issues or problems. The networking will have a "failsafe" mechanism that would allow all tables to be reset or cleared in the event of a malfunction. Copies of the tables would be routinely backed up to the gateways and on the satellites themselves.

While we recognize that there is concern with having critical processing taking place on the satellites, we are incorporating several failsafe techniques into the design to insure our control of the processing.

This system provides the dynamic flexibility of data transport that has come to be expected of professionally managed networks. With the ability to guarantee bandwidth, performance and security, this satellite network will set a new standard in how data is transported and handled by a satellite network. The enormous flexibility will enable operations to develop feature sets attractive to the client's needs for years to come, while also keeping costs well under control.

### Examples of usage:

If an oil exploration company in the Gulf of Mexico wants to institute new real time measurements and controls on their rig operations and monitor/control them from Houston, we can provide this with direct rig to headquarters links. Completely secure, no gateway needed.

If cruise operators would like to go to cloud management of their fleets and hotel services, we can not only network them all together into a high performance cloud, but also provide peering services with all parties Completely secure, no gateway needed.

If an international bank wants completely secure connections to certain other bank operations around the world, we can provide that. Completely secure, no gateway needed.

If an Island nation wants to link their remote islands for government services, telemedicine, communications, schools and even video, we can supply that connectivity at a very reasonable cost.

The terms "comprising," "including," and "having," as used in the claims and specification herein, shall be considered as indicating an open group that may include other elements not specified. The terms "a," "an," and the singular forms of words shall be taken to include the plural form of the same words, such that the terms mean that one or more of something is provided. The term "one" or "single" may be used to indicate that one and only one of something is intended. Similarly, other specific integer values, such as "two," may be used when a specific number of things is intended. The terms "preferably," "preferred," "prefer," "optionally," "may," and similar terms are used to indicate that an item, condition or step being referred to is an optional (not required) feature of the invention.

The invention has been described with reference to various specific and preferred embodiments and techniques. However, it should be understood that many variations and modifications may be made while remaining within the scope of the invention. It will be apparent to one of ordinary skill in the art that methods, devices, device elements, materials, procedures and techniques other than those specifically described herein can be applied to the practice of the invention as broadly disclosed herein without resort to undue experimentation. All art-known functional equivalents of methods, devices, device elements, materials, procedures and techniques described herein are intended to be encompassed by this invention. Whenever a range is disclosed, all subranges and individual values are intended to be encompassed. This invention is not to be limited by the embodiments disclosed, including any shown in the drawings or exemplified in the specification, which are given by way of example and not of limitation.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

All references throughout this application, for example patent documents including issued or granted patents or equivalents, patent application publications, and non-patent literature documents or other source material, are hereby incorporated by reference herein in their entireties, as though individually incorporated by reference, to the extent each reference is at least partially not inconsistent with the disclosure in the present application (for example, a reference that is partially inconsistent is incorporated by reference except for the partially inconsistent portion of the reference).

## Claims

1. A system for routing data between ground-based networks and satellites, the system comprising:
a plurality of low earth orbit communication satellites, wherein each low earth orbit communication satellite has a plurality of adjacent low earth orbit communication satellites;
a plurality of terrestrial client stations selected from ground-based client stations, mobile client stations, and combinations thereof;
a plurality of terrestrial gateways;
a plurality of communication links between said plurality of low earth orbit communication satellites and said plurality of terrestrial gateways;
a plurality of communication links between said plurality of low earth orbit communication satellites and said plurality of terrestrial clients; and
a plurality of inter-satellite communication links between said adjacent low earth orbit communication satellites;
the system being **characterised in that** each of said plurality of low earth orbit communication satellites comprise twelve client facing beams and four inter-satellite link beams, and wherein each of said twelve client facing beams can be dynamically switched via software control between a client mode and a gateway mode.

2. The system of claim 1, wherein each low earth orbit communication satellite has up to four adjacent low earth orbit communication satellites.

3. The system of claim 1, wherein the plurality of communication links between said plurality of low earth orbit communication satellites and said plurality of terrestrial clients is facilitated by a client facing beam located on one of said plurality of low earth orbit communication satellites.

4. The system of claim 1, wherein the plurality of communication links between said plurality of low earth orbit communication satellites and said plurality of terrestrial clients is facilitated by at least one client facing beam located on one of said plurality of low earth orbit communication satellites and at least one inter-satellite communication link between two adjacent low earth orbit communication satellites.

5. The system of claim 1, wherein the plurality of communication links between said plurality of low earth orbit communication satellites and said plurality of terrestrial clients is facilitated by at least one client facing beam located on one of said plurality of low earth orbit communication satellites, at least one inter-satellite communication link between two adjacent low earth orbit communication satellites, and at least one gateway facing beam located on another one of said plurality of low earth orbit communication satellites.

6. The system of claim 1, wherein said plurality of low earth orbit communication satellites comprise at least one on board processor for network management.

## Patentansprüche

1. System zum Routing von Daten zwischen bodenbasierte Netzwerken und Satelliten, wobei das System umfasst:
eine Vielzahl von Kommunikationssatelliten auf niedriger Erdumlaufbahn, wobei jeder Kommunikationssatellit auf niedriger Erdumlaufbahn eine Vielzahl von benachbarten Kommunikationssatelliten auf niedriger Erdumlaufbahn aufweist;
eine Vielzahl von terrestrischen Client-Stationen, die von den bodenbasierten Client-Stationen, mobilen Client-Stationen und Kombinationen daraus ausgewählt wurden;
eine Vielzahl von terrestrischen Gateways;
eine Vielzahl von Kommunikationslinks zwischen der Vielzahl von Kommunikationssatelliten auf niedriger Erdumlaufbahn und der Vielzahl von terrestrischen Gateways;
eine Vielzahl von Kommunikationslinks zwischen der Vielzahl von Kommunikationssatelliten auf niedriger Erdumlaufbahn und der Vielzahl von terrestrischen Clients; und
eine Vielzahl von Intersatelliten-Kommunikationslinks zwischen benachbarten Kommunikationssatelliten auf niedriger Erdumlaufbahn;
wobei das System **dadurch gekennzeichnet ist, dass** jeder der Vielzahl von Kommunikationssatelliten auf niedriger Erdumlaufbahn zwölf dem Client zugewandte Strahlen und vier Intersatelliten-Linkstrahlen umfasst, und wobei jeder der zwölf dem Client zugewandten Strahlen dynamisch über eine Softwaresteuerung bzw. -regelung zwischen einem Client-Modus und einem Gateway-Modus geschaltet werden kann.

2. System nach Anspruch 1, wobei jeder Kommunikationssatellit auf niedriger Erdumlaufbahn bis zu vier benachbarte Kommunikationssatelliten auf niedriger Erdumlaufbahn aufweist.

3. System nach Anspruch 1, wobei die Vielzahl von Kommunikationslinks zwischen der Vielzahl von Kommunikationssatelliten auf niedriger Erdumlaufbahn und der Vielzahl von terrestrischen Clients von einem dem Client zugewandten Strahl ermöglicht wird, der sich auf einem der Vielzahl von Kommunikationssatelliten auf niedriger Erdumlaufbahn befindet.

4. System nach Anspruch 1, wobei die Vielzahl von Kommunikationslinks zwischen der Vielzahl von Kommunikationssatelliten auf niedriger Erdumlaufbahn und der Vielzahl von terrestrischen Clients durch mindestens einen dem Client zugewandten Strahl ermöglicht wird, der sich auf einem der Vielzahl von Kommunikationssatelliten auf niedriger Erdumlaufbahn und mindestens einem Intersatelliten-Kommunikationslink zwischen zwei benachbarten Kommunikationssatelliten auf niedriger Erdumlaufbahn befindet.

5. System nach Anspruch 1, wobei die Vielzahl von Kommunikationslinks zwischen der Vielzahl von Kommunikationssatelliten auf niedriger Erdumlaufbahn und der Vielzahl von terrestrischen Clients durch mindestens einen dem Client zugewandten Strahl, der sich auf einem der Vielzahl von Kommunikationssatelliten auf niedriger Erdumlaufbahn, mindestens einen Intersatelliten-Kommunikationslink zwischen zwei benachbarten Kommunikationssatelliten auf niedriger Erdumlaufbahn befindet, und mindestens einen dem Gateway zugewandten Strahl ermöglicht wird, der sich auf einem anderen der Vielzahl von Kommunikationssatelliten auf niedriger Erdumlaufbahn befindet.

6. System nach Anspruch 1, wobei die Vielzahl von Kommunikationssatelliten auf niedriger Erdumlaufbahn mindestens einen integrierten Prozessor für Netzwerkmanagement umfasst.

## Revendications

1. Système permettant de router des données entre des réseaux au sol et des satellites, le système comprenant :
une pluralité de satellites de communication en orbite terrestre basse, dans lequel chaque satellite de communication en orbite terrestre basse a une pluralité de satellites de communication en orbite terrestre basse adjacents ;
une pluralité de stations clientes terrestres sélectionnées parmi des stations clientes au sol, des stations clientes mobiles et des combinaisons de celles-ci ;
une pluralité de passerelles terrestres ;
une pluralité de liaisons de communication entre ladite pluralité de satellites de communication en orbite terrestre basse et ladite pluralité de passerelles terrestres ;
une pluralité de liaisons de communication entre ladite pluralité de satellites de communication en orbite terrestre basse et ladite pluralité de clients terrestres ; et
une pluralité de liaisons de communication intersatellites entre lesdits satellites de communication en orbite terrestre basse adjacents ;
le système étant **caractérisé en ce que** chacun de ladite pluralité de satellites de communication en orbite terrestre basse comprend douze faisceaux d'interaction client et quatre faisceaux de liaisons intersatellites, et dans lequel chacun desdits douze faisceaux d'interaction client peut être commuté de manière dynamique par l'intermédiaire d'une commande logicielle entre un mode client et un mode passerelle.

2. Système selon la revendication 1, dans lequel chaque satellite de communication en orbite terrestre basse a jusqu'à quatre satellites de communication en orbite terrestre basse adjacents.

3. Système selon la revendication 1, dans lequel la pluralité de liaisons de communication entre ladite pluralité de satellites de communication en orbite terrestre basse et ladite pluralité de clients terrestres est favorisée par un faisceau d'interaction client situé sur un de ladite pluralité de satellites de communication en orbite terrestre basse.

4. Système selon la revendication 1, dans lequel la pluralité de liaisons de communication entre ladite pluralité de satellites de communication en orbite terrestre basse et ladite pluralité de clients terrestres est favorisée par au moins un faisceau d'interaction client situé sur un de ladite pluralité de satellites de communication en orbite terrestre basse et au moins une liaison de communication intersatellite entre deux satellites de communication en orbite terrestre basse adjacents.

5. Système selon la revendication 1, dans lequel la pluralité de liaisons de communication entre ladite pluralité de satellites de communication en orbite terrestre basse et ladite pluralité de clients terrestres est favorisée par au moins un faisceau d'interaction client situé sur un de ladite pluralité de satellites de communication en orbite terrestre basse, au moins une liaison de communication intersatellite entre deux satellites de communication en orbite terrestre basse adjacents, et au moins un faisceau d'interaction passerelle situé sur un autre de ladite pluralité de satellites de communication en orbite terrestre basse.

6. Système selon la revendication 1, dans lequel ladite pluralité de satellites de communication en orbite terrestre basse comprend au moins un processeur embarqué pour une gestion de réseau.
